# EUROPEAN PATENT APPLICATION

(11) **EP 3 279 856 A1**
(43) Date of publication of application: **07.02.2018**
(21) Application number: 15887545.0
(22) Date of filing: 30.03.2015
(51) Int. Cl.: G06Q 50/10, E02F 9/20, G06K 17/00

(54) **COMPONENT INFORMATION MANAGEMENT SYSTEM AND COMPONENT INFORMATION MANAGEMENT METHOD**

(71) Applicant: Komatsu Ltd., Minato-ku Tokyo 107-8414 (JP)
(72) Inventor: KOSHI Takayuki, Hiratsuka-shi Kanagawa 254-8555 (JP)
(74) Representative: Grünecker Patent- und Rechtsanwälte PartG mbB
(86) International application number: PCT/JP2015/060021
(87) International publication number: WO 2016/157392

(57) **Abstract**

A parts information management system (100) includes an identification device (30) attached to a target part at an installation position and storing parts information for identifying the target part, a communication device (15) wirelessly communicating with the identification device (30) to acquire the parts information, a transmitter (200) transmitting acquisition information including the acquired parts information, and a management apparatus (111) managing the received acquisition information. The parts information includes type information indicating a type of the target part and unique information for distinguishing the target part from the target parts of the same type. The management apparatus (111) includes an acquisition information judgment unit (1114) judging presence in the acquisition information of more pieces of parts information of the same type having the same type information and different unique information than the number of target parts provided at the installation position, and a notification unit (1120) outputting malfunction information upon judgment that more number of the parts information of the same type than the number of parts is present.

## Description

### TECHNICAL FIELD

The present invention relates to a parts information management system and a parts information management method. For instance, the present invention relates to a parts information management system and a parts information management method for managing parts information of a part provided in a working vehicle.

### BACKGROUND ART

A construction machine (e.g., a hydraulic excavator and a wheel loader), a delivery vehicle (e.g., a dump truck) and the like are typically known as a working vehicle. It is known in the art that an IC chip (identification part) is attached to a replacement part (e.g., a filter) installed in such a working vehicle and information stored in the IC chip is read using a sensor to identify whether the replacement part is a genuine part or an imitation (see, for instance, Patent Literature 1).

In a replacement parts identification device disclosed in Patent Literature 1, the IC chip (identification part) is embedded in a genuine replacement part warranted by a manufacturer of a construction machine and a reader (sensor) is positioned so as to detect needed information stored in the IC chip. When a malfunction detection signal to be outputted when the needed information is not detected is outputted from the sensor, a controller stops an operation of an engine and/or displays an alarm message on a monitor.

When a signal indicating replacement by another genuine filter is outputted from the sensor, the controller stores an attachment timing of the filter and calculates a next replacement timing to notify an operator of the replacement timing. Further, the controller stores presence or absence of the replacement of the genuine filter and the number of times of the replacement.

### CITATION LIST

### PATENT LITERATURE(S)

Patent Literature 1: JP-2005-273196 A

### SUMMARY OF THE INVENTION

### PROBLEM(S) TO BE SOLVED BY THE INVENTION

Spare part(s) (unused part(s)) or used part(s) are sometimes stored (disposed) or left uncollected in the working vehicle. In this case, if the currently used replacement part (i.e. a part disposed at a predetermined installation position) and a replacement part of the same type as the currently used replacement part are positioned within a communication range of the reader, since the reader acquires information from both of the parts, it may become impossible to recognize which one of the parts is currently used. Under such circumstance, it may become impossible to perform appropriate management of the replacement part and collection of unnecessary part.

An object of the invention is to provide a parts information management system and a parts information management method which are capable of notification of a possibility of presence of uncollected part(s).

### MEANS FOR SOLVING THE PROBLEM(S)

A parts information management system according to a first aspect of the invention includes: an identification device attached to a target part provided at a predetermined installation position, the identification device being configured to store parts information for identifying the target part; a communication device configured to wirelessly communicate with the identification device to acquire the parts information: a transmitter configured to transmit acquisition information comprising the parts information acquired by the communication device; and a management apparatus configured to manage the acquisition information transmitted from the transmitter. The parts information includes: type information indicating a type of the target part: and unique information for distinguishing the target part from target parts of the same type. The management apparatus includes: an acquisition information judgment unit configured to judge whether or not the received acquisition information comprises more number of pieces of parts information of the same type having the same type information and different unique information than a number of parts defined by a number of the target part provided at the installation position; and a notification unit configured to output malfunction information when the acquisition information judgment unit judges that the acquisition information comprises more the parts information of the same type than the number of parts.

It should be noted that the type information is exemplified by an item number and product name of the target part. The unique information is exemplified by information unique to the target part (e.g. serial number) and information unique to the identification device (e.g. tag ID).

Further, the malfunction information is, for instance. information indicating a possibility of presence of the target part not installed at the installation position. Further, the notification unit may output the malfunction information by, for instance, displaying the contents of the malfunction information on a monitor, and/or outputting the contents of the malfunction information using a speaker.

When a plurality of the identification devices are present in the communication range of the communication device, the communication devices acquire parts information from each of the identification devices. For instance, when the identification device attached to a first target part (target part in use) installed at the installation position and the identification device attached to a second target part (target part not in use) of the same type as the first target part and disposed at a position different from the installation position are located within the communication range, the communication device may acquire the parts information from both of the identification devices. These pieces of parts information are of the same type information but of different unique information (pieces of parts information of the same type). The acquisition information including the parts information is transmitted to the management apparatus via the transmitter.

Then, the acquisition information judgment unit of the management apparatus judges whether or not more number of the pieces of parts information of the same type than the corresponding number of parts are included in the received acquisition information.

When, for instance, the number of the pieces of parts information of the same type included in the acquisition information is two and the number of parts is two, the number of the pieces of parts information of the same type, which is the same as the corresponding number of the target parts, is normal.

In contrast, when the number of the pieces of parts information of the same type is two and the number of parts is one, it is possible that the target part represented by any one of the parts information of the same type is disposed (left uncollected) at a position different from the installation position.

Accordingly, when the acquisition information judgment unit judges that more number of the pieces of parts information of the same type than the corresponding number of parts are included in the received acquisition information, the notification unit outputs the malfunction information.

According to the above first aspect of the invention, the administrator (user) and the like of the management apparatus can be notified of the possibility of the presence of the target part being left uncollected without being installed at the corresponding installation position. Thus, the presence of the target part can be recognized.

It is preferable in the parts information management system according to the first aspect of the invention that the management apparatus includes a storage unit configured to store the type information and the number of parts in association with each other, and the acquisition information judgment unit is configured to acquire from the storage unit the number of parts of the target part corresponding to the type information included in the pieces of parts information of the same type to judge whether or not more number of the pieces of parts information of the same type than the number of parts are included in the acquisition information.

According to the above arrangement of the first aspect of the invention, since the number of the target part installed at the installation position (number of parts) is stored in the storage unit, the acquisition information judgment unit can easily and appropriately determine whether or not the number of the pieces of parts information of the same type included in the acquired acquisition information is larger than the number of parts. Thus, the presence of the target part not installed at the installation position can be appropriately determined.

It is preferable in the parts information management system according to the first aspect of the invention that the communication device includes a measurement unit configured to measure a received strength of an electric wave, the electric wave including the parts information and being outputted from the identification device to be received by the communication device, the transmitter is configured to transmit the acquisition information, in which the received strength measured by the measurement unit and the parts information included in the electric wave are associated with each other, to the management apparatus, the management apparatus includes an identifying unit that is configured to identify one of the parts information of the same type as the parts information of the target part not provided at the installation position, a difference between the received strength associated with the one of the parts information of the same type and the received strength previously acquired for the target part indicated by the type information included in the one of the parts information of the same type being out of a predetermined range, when the acquisition information judgment unit judges that more number of the pieces of parts information of the same type than the number of parts is included in the acquisition information, and the notification unit is configured to output the one of the pieces of the parts information identified by the identifying unit together with the malfunction information.

Based on the received strength of the electric wave received from the identification device, the relative distance from the identification device to the communication device can be recognized. When a received strength of the received electric wave is different from the received strength of the electric wave received from the identification device attached to the target part installed at the installation position, the target part may be present at a position different from the installation position.

In view of the above, in the above arrangement of the first aspect of the invention, the measurement unit of the communication device measures the received strength of the electric wave received from the identification device, and the transmitter transmits the acquisition information in which the parts information included in the received electric wave is associated with the received strength of the electric wave. In the management apparatus, the identifying unit identifies one of the parts information of the same type associated with the received strength whose difference from the received strength that is acquired in the past for the target part represented by the type information included in the pieces of parts information of the same type is out of the predetermined range, as the parts information of the target part not installed at the installation position. Then, the notification unit outputs the identified parts information (i.e. the parts information of the target part(s) not installed at the installation position) together with the malfunction information.

According to the above arrangement, since the parts information of the target part left uncollected without being installed at the installation position can be outputted, an administrator of the management apparatus can recognize the details of the uncollected target part.

A parts information management system according to a second aspect of the invention includes: an identification device attached to a target part provided at a predetermined installation position, the identification device being configured to store parts information for identifying the target part; a communication device configured to wirelessly communicate with the identification device to acquire the parts information; a transmitter configured to transmit the parts information acquired by the communication device; and a management apparatus configured to manage the parts information received from the transmitter. The parts information includes type information indicating a type of the target part. The communication device includes a measurement unit configured to measure a received strength of an electric wave, the electric wave including the parts information and being outputted from the identification device to be received by the communication device. The transmitter is configured to transmit the received strength measured by the measurement unit and the parts information included in the electric wave to the management apparatus. The management apparatus includes: a status judgment unit configured to associate the acquired parts information with the received strength and to judge whether or not a difference between the acquired received strength and the received strength previously acquired for the target part indicated by the type information included in the parts information continuously exceeds a predetermined range for a predetermined period; and a notification unit configured to output malfunction information when the status judgment unit judges that the difference continuously exceeds the predetermined range for the predetermined period.

The contents of the malfunction information are, for instance, information indicating a possibility of detachment of the target part previously installed at the installation position. The notification process by the notification unit may be, for instance, the same as the notification process performed by the notification unit of the parts information management system according to the first aspect of the invention.

It is possible that an imitation (a target part attached with no identification device or a target part attached with an improper identification device) is installed at the installation position and a genuine product (a target part attached with the identification device) is disposed in the vicinity of the installation position. In this case, it is also possible that the parts information is acquired from the identification device attached to the genuine product to cause a false recognition that the genuine product is installed at the installation position.

On the other hand, the received strength of the electric wave outputted from the identification device suffers temporary change due to an environmental factor, in addition to the change according to the distance between the identification device and the communication device as described above.

Accordingly, if the change in the received strength is used as an index for determining whether or not the target part is detached from the installation position (i.e. an index for determining whether or not the target part is disposed at a position different from the installation position), it is possible that the target part is judged to be detached when the received strength changes due to the environmental factor. In this case, the actual use state becomes different from the use state recognized by the management apparatus,

On the other hand, since the change in the received strength due to the environmental factor is temporary, when the change in the received strength continues for a long time, it can be safely judged that the target part is detached from the installation position.

In view of the above, in the second aspect of the invention, when the status judgment unit of the management apparatus judges that the difference between the received strength of the newly acquired parts information and the received strength that is acquired in the past for the target part represented by the type information included in the parts information is continuously out of the predetermined range for a predetermined period, the notification unit outputs the malfunction information. According to the above arrangement, the administrator and the like of the management apparatus can be notified of the possibility that the target part installed at the installation position is detached and left uncollected in the vicinity of the installation position. Accordingly, the target part can be appropriately managed.

The parts information management system according to the first and second management system preferably includes a working vehicle including the identification device, the communication device and the transmitter; a management center including the management apparatus; and a communication network configured to wirelessly connect the working vehicle and the management center.

With the above arrangement, the parts information of the target part installed in the working vehicle can be managed by the management center remote from the working vehicle via the communication network.

A parts information management system according to a third aspect of the invention includes: a working vehicle; a management center; and a communication network configured to wirelessly connect the working vehicle and the management center. The working vehicle includes: an identification device attached to a filter provided at a predetermined installation position, the identification device being configured to store parts information for identifying the filter; a communication device configured to wirelessly communicate with the identification device to acquire the parts information; and a transmitter configured to transmit acquisition information including the parts information acquired by the communication device. The management center includes a management apparatus configured to manage the acquisition information received from the transmitter. The parts information includes: type information indicating a type of the filter; and unique information for distinguishing the filter from filters of the same type. The management apparatus includes: a storage unit configured to store the type information and a number of parts indicating a number of the filter provided at the installation position in association with each other; an acquisition information judgment unit configured to acquire from the storage unit the number of parts corresponding to the type information included in pieces of parts information of the same type having the same type information and different unique information, and to judge whether or not more number of the pieces of parts information of the same type than the acquired number of parts is included in the acquisition information; and a notification unit configured to output malfunction information when the acquisition information judgment unit judges that the acquisition information includes more the parts information of the same type than the number of parts.

According to the above third aspect of the invention, the same advantages as those in the parts information management system according to the first aspect of the invention can be attained.

A parts information management method according to a fourth aspect of the invention is for acquiring and managing parts information, the parts information including type information indicating a type of a target part provided at a predetermined installation position, and unique information for distinguishing the target part from target parts of the same type, the method including: judging whether or not more number of pieces of parts information of the same type having the same type information and different unique information than a number of parts defined by a number of the target part provided at the installation position is acquired; and, when it is judged that the more number of pieces of parts information of the same type than the number of parts is acquired, outputting malfunction information.

According to the above fourth aspect of the invention, since the parts information management method is implemented using the same system (especially, the management apparatus) as the parts information management system according to the first aspect of the invention, the same advantages as those in the parts information management system according to the first aspect of the invention can be attained.

### BRIEF DESCRIPTION OF DRAWING(S)

Fig. 1 is a perspective view showing a hydraulic excavator as a working vehicle according to an exemplary embodiment of the invention.
Fig. 2 is a schematic view showing an inside of a machine compartment.
Fig. 3 is a schematic view showing an inside of a pump compartment.
Fig. 4 is a schematic view showing a configuration of an IC tag.
Fig. 5 illustrates parts information.
Fig. 6 is a block diagram showing a configuration of the hydraulic excavator and an overall configuration of a parts information management system.
Fig. 7 is a block diagram showing a configuration of a reader (master reader).
Fig. 8 is a block diagram showing a configuration of a reader (slave reader).
Fig. 9 is a block diagram showing a configuration of a management server.
Fig. 10 shows an example of server acquisition information.
Fig. 11 is a flowchart showing a parts information management process.

### DESCRIPTION OF EMBODIMENT(S)

An exemplary embodiment of the invention will be described below with reference to attached drawings.

### Description of Entire Parts information management system

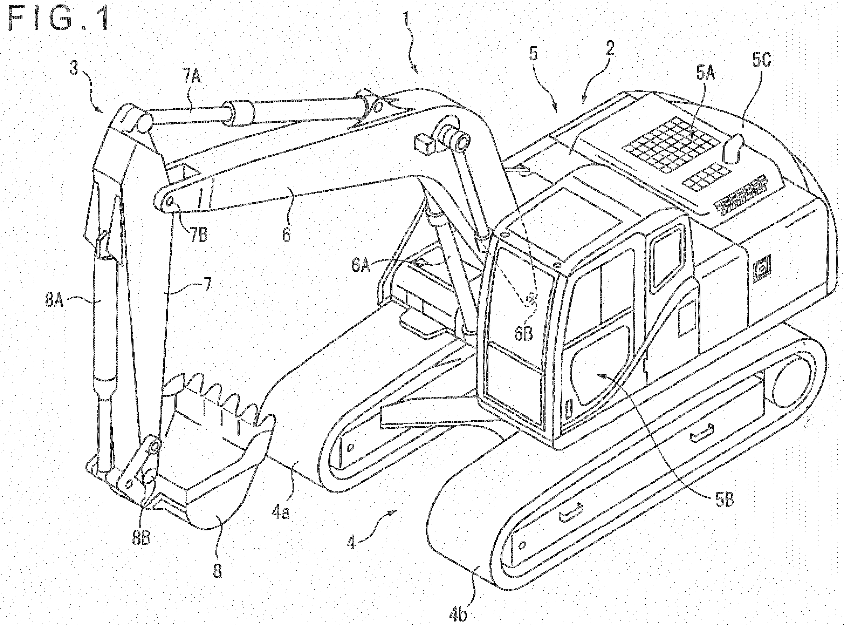

Fig. 1 is a perspective view showing a hydraulic excavator 1 as an example of a working vehicle in the exemplary embodiment.

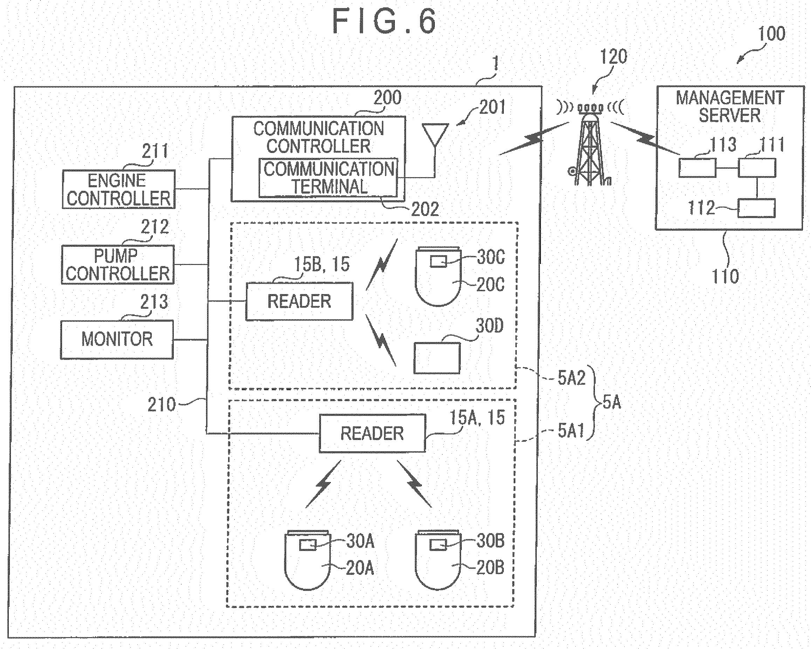

Though detailed later, a parts information management system 100 manages and monitors parts and engine EG installed in the working vehicle in a management center 110 located remote from the working vehicle (see Fig. 6) via the communication network 120. The parts information management system 100 includes the management center 110, at least one working vehicle (e.g., the hydraulic excavator 1 shown in Fig. 1), and the communication network 120 that is used to transmit and receive information between the management center 110 and the working vehicle. The working vehicle for the parts information management system 100 may be of different types (e.g., a hydraulic excavator and a bulldozer).

Among these, the communication network 120 is used for data communication in a form of wireless communication. A mobile phone network and a satellite communication network are usable.

The parts information management system 100 including the working vehicle in a form of the hydraulic excavator 1 is exemplarily described below. However, the invention is also applicable to other working vehicles in a form of a construction machine.

### Description of Overall Hydraulic Excavator

In the exemplary embodiment, the hydraulic excavator 1 includes a vehicle body 2 and working equipment 3 as shown in Fig. 1. The vehicle body 2 includes a crawler unit 4 and an upper structure 5.

In the upper structure 5, a side where the working equipment 3 and a cab 5B are disposed is defined as a front and a side where a machine compartment 5A is disposed is defined as a back. A left side of the upper structure 5 facing the front is defined as a left and a right side of the upper structure 5 facing the front is defined as a right. In the hydraulic excavator 1 and the vehicle body 2, a side near the crawler unit 4 is defined as a bottom relative to the upper structure 5 while a side near the upper structure 5 is defined as a top relative to the crawler unit 4. When the hydraulic excavator 1 is disposed on a horizontal surface, the bottom is a side in a vertical direction, namely, a direction in which gravity acts, while the top is a side in a direction opposite the vertical direction.

In the exemplary embodiment, the hydraulic excavator 1 includes an internal combustion engine (e.g., a diesel engine) as a motive power generator. However, the motive power generator of the hydraulic excavator 1 is not limited to the internal combustion engine. For instance, the hydraulic excavator 1 may include the internal combustion engine, a generator motor and an electric storage device in combination (a so-called hybrid motive power generator). Alternatively, the hydraulic excavator 1 may include a motive power generator including a motor in place of the internal combustion engine.

### Machine Compartment

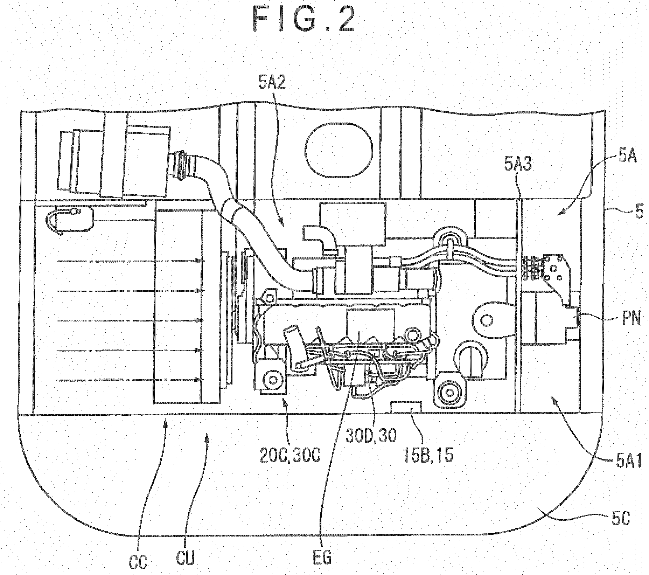

Fig. 2 is a schematic view showing the machine compartment 5A.

The upper structure 5 includes the machine compartment 5A, the cab 5B, and a counterweight 5C.

The machine compartment 5A is disposed at a first end (back side) of the upper structure 5. An inside of the machine compartment 5A is divided by a partition 5A3 into a pump compartment 5A1 and an engine compartment 5A2 as shown in Fig. 2. The pump compartment 5A1 is positioned on the right of the machine compartment 5A and the engine compartment 5A2 is positioned on the left of the machine compartment 5A, seen from the back.

### Engine compartment

The engine compartment 5A2 houses an engine EG (motive power generator) and a cooling unit CU including a cooling core CC (e.g., radiator) and the like. The cooling unit CU is disposed adjacent to the engine EG and configured to cool cooling water flowing toward the engine EG and hydraulic fluid flowing in a hydraulic device (not shown).

The engine EG is disposed in a substantially sealed space defined by four sides including the counterweight 5C, a partition in front of the engine compartment 5A2, the partition 5A3 and a door (not shown) on the left, a top plate including an engine hood disposed above the engine EG (not shown), and a bottom plate (not shown).

Further, in the engine compartment 5A2, a filter 20C (a fuel main filter), an identification device 30C, an identification device 30D attached to the engine EG, and a reader 15B that is configured to communicate with the identification devices 30C and 30D are provided. These components will be described in detail below.

The cab 5B is disposed at a second end (front side) of the upper revolving body 5 as shown in Fig. 1.

The counterweight 5C is provided on the farthest back side of the upper structure 5. The counterweight 5C is provided for weight balance with the working equipment 3 and is filled with weights. In other words, the machine compartment 5A is interposed between the cab 5B and the counterweight 5C.

The crawler unit 4 includes crawlers 4a and 4b. The crawler unit 4 is driven by a hydraulic motor (not shown) to rotate the crawlers 4a and 4b, whereby the hydraulic excavator 1 travels or is turned.

The working equipment 3 is attached to a lateral side of the cab 5B of the upper structure 5 and includes a boom 6, arm 7, bucket 8, boom cylinder 6A, arm cylinder 7A and bucket cylinder 8A. A base end of the boom 6 is jointed to a front of the vehicle body 2 through a boom pin 6B, whereby the boom 6 is movably attached. A base end of the arm 7 is jointed to a leading end of the boom 6 through an arm pin 7B, whereby the arm 7 is movably attached. The bucket 8 is jointed to a leading end of the arm 7 through a bucket pin 8B, whereby the bucket 8 is movably attached.

### Description of Pump compartment

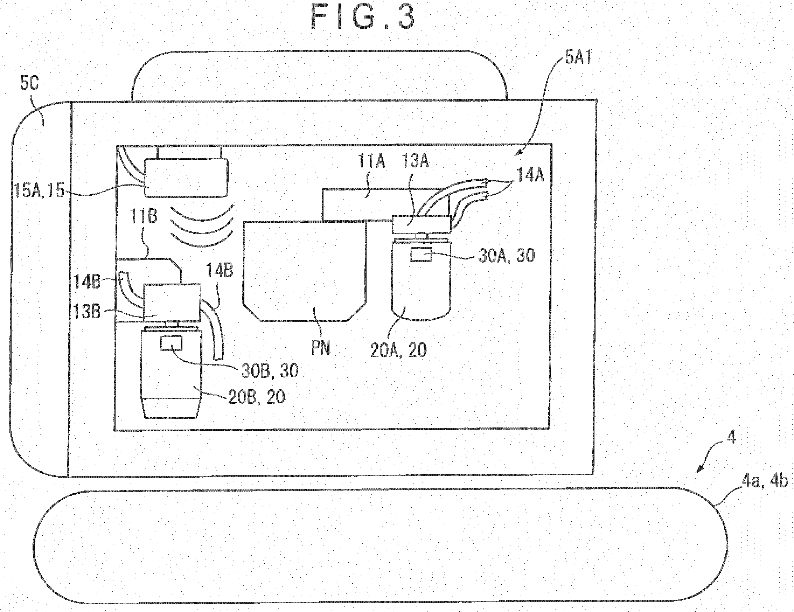

Fig. 3 is an illustration showing an inside of the pump compartment 5A1 with a door (not shown) opened from the right side of the upper structure 5. In other words, Fig. 3 is a schematic view showing a layout of the filter 20 (filters 20A and 20B) and the reader 15 (15A) in the pump compartment 5A1.

The pump compartment 5A1 is a substantially sealed space defined by being surrounded by four sides including the door (not shown) on the right, the counterweight 5C, a partition in front of the pump compartment 5A1 and the partition 5A3. the top plate (not shown) including the engine hood disposed above, and the bottom plate (not shown).

The hydraulic pump PN is housed in the pump compartment 5A1 as shown in Fig. 3. The hydraulic pump PN is mechanically connected to the engine EG and is driven by driving the engine EG. The hydraulic pump PN is configured to discharge hydraulic fluid to a hydraulic device (e.g. the above boom cylinder 6A).

Specifically, a bracket 11A, on which the hydraulic pump PN is provided, is provided in the pump compartment 5A1. A filter head 13A (filter holding part) is attached to the bracket 11A. A hose 14A is attached to the filter head 13A.

A filter head 13B is attached to the pump compartment 5A1 through a bracket 11B. A fuel hose 14B is attached to the filter head 13B.

### Filter Head in Pump compartment and Types of Filter

A filter 20A is attached to the filter head 13A. The filter 20A is an oil filter for the engine oil and is configured to remove dirt and the like contained in the engine oil flowing in the hose 14A.

The filter 20A is connected to the engine EG (see Fig. 2) through the hose 14A. The engine oil accumulated in the engine EG is pumped out of the engine EG to be transferred to the filter 20A. The engine oil after passing through the filter 20A is returned to the engine EG.

A filter 20B is attached to the filter head 13B. The filter 20B is a fuel pre-filter and is configured to remove dirt and the like contained in the fuel flowing in the fuel hose 14B. Note that the filter 20B is not a requisite for the hydraulic excavator 1. The hydraulic excavator 1 without the filter 20B is also usable.

The filter 20B (fuel pre-filter) is connected to a fuel tank (not shown) through the hose 14B. The fuel in the fuel tank (not shown) is transferred to the filter 20B. Subsequently, the fuel is transferred to the filter 20C (fuel main filter). After passing through the filter 20C, the fuel is transferred to a fuel injector (not shown). The fuel remaining in the fuel injector is returned to the fuel tank through a hose (not shown).

As described above, the filters 20A and 20B are provided in the pump compartment 5A1 while the filter 20C is provided in the engine compartment 5A2.

The filters 20 (20A, 20B, 20C) are parts requiring a regular replacement since a filter member inside the filters is clogged by use of the filters 20. Timing for the regular replacement is judged, for instance, based on accumulated operational duration shown by SMR (service meter) that measures operational duration of the engine EG in the hydraulic excavator 1. Such a judgment process is conducted, for instance, by a communication controller 200. a monitor 213 or a management server 111, which will be described later.

Identification devices 30A, 30B and 30C are respectively attached to the filters 20A, 20B and 20C. The identification device 30D is attached to the engine EG as described above. In other words, the filters 20A, 20B and 20C and the engine EG arc target parts to which the identification devices 30 (30A, 30B, 30C, 30D) are attached. It should be noted that, though the number of each the filters of different types provided in the single working vehicle is exemplarily one in the exemplary embodiment, the number of each of the different types of filters provided in the single working vehicle may be more than one. It should also be noted that the type of the target parts may be sometimes referred to as an item number, where different item numbers indicate different types of the parts.

### Description of Identification Device

The identification devices 30 (30A, 30B, 30C, 30D) store and provide information relating to the target parts (including devices such as the engine EG in addition to the replacement parts) to which the identification devices 30 are attached.

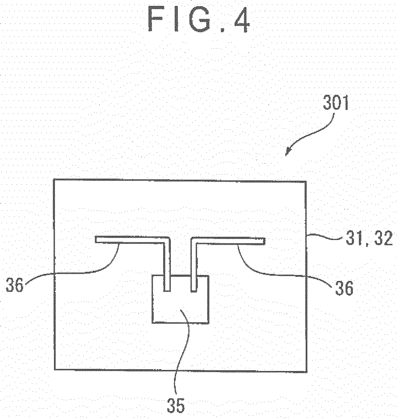

A passive type IC tag 301 that generates electric power by electromagnetic induction, microwaves and the like caused by electric waves outputted from the readers 15 (15A,15B) is usable as the identification devices 30A, 30B and 30C. In the exemplary embodiment, each of the identification devices 30A, 30B and 30C includes one or more of the IC tag 301 (identification part) (see Fig. 4). Accordingly, each of the identification devices 30A, 30B and 30C may include a single IC tag 301 or a plurality of the IC tags 301.

The identification device 30D includes a single passive-type IC tag 301 described above. The IC tag 301 of the identification device 30D may be the same as or different from the IC tags 301 of the respective identification devices 30A, 30B and 30C in shape and configuration. The IC tag 301 of the identification device 30D at least includes an antenna 36 and an IC chip 35, which will be described below.

Since each of the identification devices 30 thus includes the passive type IC tag 301, an internal battery is unnecessary, so that a cost is reducible and operation failure caused by a run-out battery is preventable.

### Description of IC Tag

Fig. 4 is a schematic view showing a configuration of the IC tag 301.

The IC tag 301 is an RFID (Radio Frequency Identification) tag in which the IC chip 35 and the internal antenna 36 are encapsulated with package materials 31 and 32.

The IC tag 301 of the exemplary embodiment can communicate in a communication frequency zone, namely, a UHF (ultrahigh frequency) zone, specifically, in a zone of 860 MHz to 960 MHz. The communication frequency zone of the RFID tag may be a zone other than the above zone.

The IC chip 35 is connected to the antenna 36. A shape and a size of the antenna 36 are set so that the antenna 36 can communicate with the readers 15A and 15B. The IC chip 35 and the antenna 36 are held between the package materials 31 and 32. Fig. 4 is an illustration with the package material 31 being seen through. The IC tag 301 is attached to each of the filters 20A, 20B and 20C and the engine EG with a bonding member such as a double-sided adhesive tape or an adhesive agent.

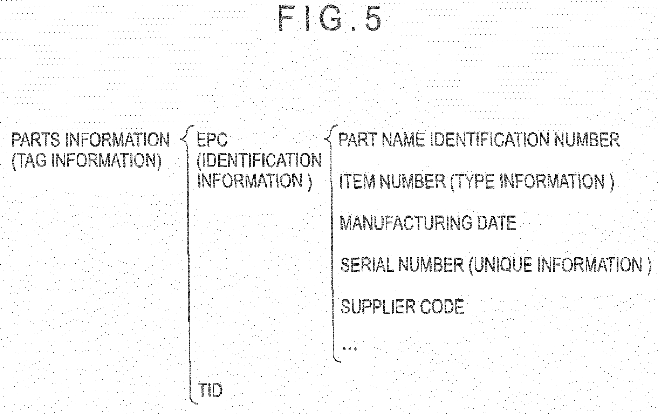

Fig. 5 illustrates contents of parts information.

As shown in Fig. 5. the IC chip 35 stores the parts information (tag information) including a code for identifying an IC chip 35 (TID: Tag Identifier) and a code for identifying a part (e.g.. the filter 20 and the engine EG) to which each of the identification devices 30 is attached (EPC: Electronic Product Code).

Among the above codes, EPC stores identification information including a part name identification number for identifying a name of a part, the item number (type information) for specifying the type of the part to which each of the identification devices 30 is attached, a manufacturing date, a serial number (manufacturing number) (unique information) for specifying each of parts having the same item number, and a supplier code showing a manufacturer of the part. The part name identification number is used for identifying the parts such as an engine oil filter, fuel pre-filter and fuel main filter. For instance, an individual number is allocated to each of the parts as the part name identification number. When the part is the engine EG, an individual number allocated to the engine may be defined as the part name identification number. Moreover, when the part is the engine EG, the identification information includes, for instance, the number of times of overhaul of the engine EG.

The TID is unique information that is unique to each of the IC tags 301. Accordingly, with the item number of a certain target part and the TID of the IC tag 301 attached to the target part being acquired, even if a plurality of IC tags 301 are attached to the target part, the target part can be distinguished from other target part(s) of the same item number based on the item number and TID. It should be noted that, when the identification device 30 has only one IC tag 301, the target part can be distinguished from the other target parts of the same item number as long as the information on the item number and TID can be acquired from the identification device 30 even if the combination of the item number and TID is not known.

Further, the above serial number is unique information that is unique to one of target parts of the same item number. Accordingly, each of the target parts is distinguishable from the other target parts of the same item number based on the item number and the serial number.

### Description of Reader

Fig. 6 is a block diagram showing a configuration of the hydraulic excavator 1 and an overall configuration of the parts information management system 100 including the hydraulic excavator 1 in the exemplary embodiment.

The readers 15 (15A, 15B), which are communication devices to communicate with the identification devices 30A, 30B, 30C and 30D, are attached to the machine compartment 5A as shown in Fig. 6. The readers 15 read out parts information including the identification information (hereinafter, sometimes simply referred to as "data") stored in the respective IC tags 301 of the identification devices 30A, 30B, 30C and 30D. In the exemplary embodiment, the readers 15 each have a reading function. However, the readers 15 each may be replaced by a reader-writer having a writing function in addition to the reading function.

The reader 15A is provided in the pump compartment 5A1. The reader 15A communicates with the identification devices 30A and 30B respectively attached to the filters 20A and 20B and supposed to be positioned within a communication range of the reader 15A, under the control by the communication controller 200 (described later). The reader 15A reads out the parts information from the identification devices 30A and 30B assuming that the parts information is readable. Further, the reader 15A controls an operation of the reader 15B. In other words, the reader 15A serves as a master reader, while the reader 15B serves as a slave reader controllable by the master reader. The reader 15B reads out the parts information from the identification devices 30C and 30D assuming that the parts information is readable. Note that the communication range of the reader 15A indicates a range in which electric waves outputted from the reader 15A can reach the identification devices 30 and the reader 15A can receive response signals outputted from the identification devices 30 in response to the outputted electric waves. The same description is applied to a communication range of the reader 15B.

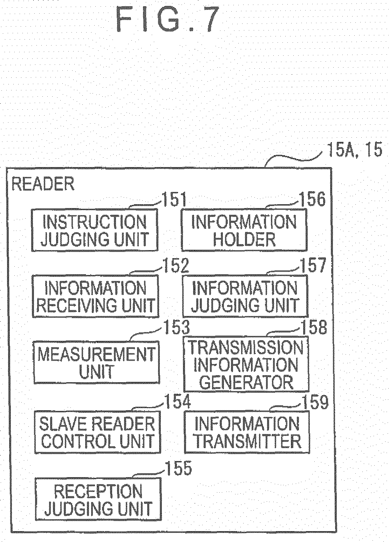

Fig. 7 is a block diagram showing a configuration of the reader 15A serving as the master reader.

As shown in Fig. 7, the reader 15A includes an instruction judging unit 151, information receiving unit 152, measurement unit 153, slave control unit 154. reception judging unit 155. information holder 156, information judging unit 157, transmission information generator 158 and information transmitter 159.

The instruction judging unit 151 judges whether or not instruction information of acquiring the parts information stored in the identification devices 30 is inputted from the communication controller 200 described later.

When the instruction judging unit 151 judges that the instruction information is inputted, the information receiving unit 152 outputs the electric waves to the identification devices 30 for a predetermined time and receives the electric waves outputted from the identification devices 30.

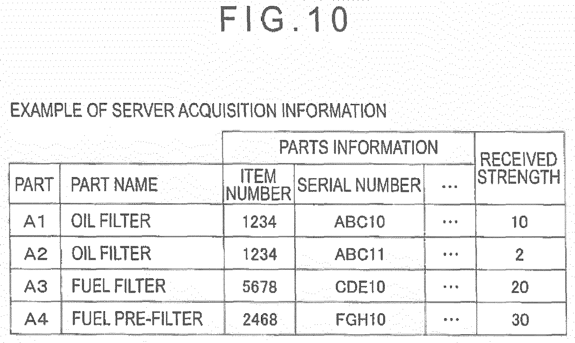

The measurement unit 153 measures a received signal strength indicator (RSSI) in a form of a received strength of the electric waves received from the identification device 30. The received strength measured by the measurement unit 153 is held in association with the parts information included in the measured electric waves by the later-described information holder 156. The information in which the received strength measured by the measurement unit 153 is associated with the parts information included in the electric waves is included in the information transmitted by the latter-described information transmitter 159 (see Fig. 10).

The slave control unit 154 controls the operation of the reader 15B serving as the slave reader. For instance, the slave control unit 154 outputs the same instruction information as the above instruction information to the reader 15B.

The reception judging unit 155 judges whether or not the electric waves including the parts information stored in the identification devices 30 are received from the identification devices 30 based on the electric waves received by the information receiving unit 152. Moreover, the reception judging unit 155 judges whether or not the reader 15B is normally operated by judging whether or not the reception judging unit 153 can receive the parts information from the reader 15B within a predetermined time elapsed after the instruction information is outputted from the slave control unit 154.

When the reception judging unit 156 judges that the parts information is received from the identification devices 30 based on the electric waves outputted from the information receiving unit 152 and when the reception judging unit 155 judges that the parts information of the identification devices 30 is received from the reader 15 (15B) serving as the slave reader, the information holder 156 holds both of the above pieces of the parts information as master acquisition information. In other words, as the master acquisition information, the information holder 156 holds the parts information received from the identification devices 30A and 30B that are target parts of which parts information are supposed to be acquired by the reader 15A and the slave acquisition information including the parts information of the identification devices 30C and 30D acquired by the reader 15B.

At this time, the information holder 156 holds the acquired pieces of the parts information and the received strengths measured by the measurement unit 153 in association with each other. Specifically, the information holder 156 holds the parts information included in the electric waves received from the identification device 30A in association with the received strength of the electric waves, and also holds the parts information included in the electric waves received from the identification device 30B in association with the received strength of the electric waves. It should be noted that, since the parts information and the received strength are associated with each other also in the reader 15B, the slave acquisition information includes the parts information and the received strength for the identification device 30C that are associated with each other, and the parts information and the received strength for the identification device 30D that are associated with each other. The information holder 156 holds the master acquisition information including the pieces of the parts information and the corresponding received strengths.

The information judging unit 157 judges whether or not the slave acquisition information, which is included in the master acquisition information and held by the information holder 156, contains error information.

Moreover, the information judging unit 157 executes an overlapping judgment process of judging whether or not same pieces of the parts information (i.e. the same pieces of parts information) is included in the held master acquisition information. In other words, the information judging unit 157 corresponds to an identical-information judging unit of the exemplary embodiment.

In the exemplary embodiment, the information judging unit 157 judges the parts information at least having the same item number and the same serial number to be the same pieces of parts information (parts information having the same EPC (identification information for identifying each of the target parts)). However, even when all of the identification devices 30A, 30B, 30C and 30D provided to the hydraulic excavator 1 have different item numbers (type infommation), as long as there is the parts information having the same item number as the item number read by the reader 15A or the reader 15B, the information judging unit 157 may judge the parts information to be the same pieces of parts information (parts information having the same identification information). Moreover, even when all of the identification devices 30A, 30B, 30C and 30D provided to the hydraulic excavator 1 have different serial numbers (unique information), as long as there is the parts information having the same serial number as serial number read by the reader 15A or the reader 15B, the information judging unit 157 may judge that the parts information is the same pieces of parts information (parts information having the same identification information).

Each of the identification devices 30A, 30B and 30C includes at least one IC tag 301. One of the readers 15 occasionally receives the parts information from the plurality of identification devices 30A, 30B and 30C, or the parts information from the identification device 30D, depending on the location of the IC tags 301. In other words, each of the readers 15 occasionally receives the parts information having different contents from the IC tags 301 of the identification devices 30.

On the other hand, a plurality of readers 15 (15A, 15B), which are disposed at different positions, occasionally receive the parts information from a single one of the identification devices 30, depending on location of the identification devices 30.

Accordingly, for instance, one of the readers 15 may receive the parts information from a single IC tag 301 of one of the identification devices 30, or alternatively, the plurality of readers 15 each may receive the parts information having the same identification information from the single IC tag 301 of single one of the identification devices 30. In other words, depending on communication conditions between the readers 15 and the identification devices 30, the readers 15 occasionally receive the parts information from one of the identification devices different from the identification device(s) 30 supposed to be positioned within the communication range of each of the readers 15.

In order to address the above problem, when the information judging unit 157 judges that the same pieces of parts information are contained in the master acquisition information, the information holder 156 executes an organizing process (merging process) of deleting the same pieces of parts information except for one of those to organize the same pieces of parts information.

Accordingly, the master acquisition information held by the information holder 156 does not contain the same pieces of parts information. Although the information holder 156 is configured to delete the parts information judged to be the same pieces of parts information except for one of those in the exemplary embodiment, instead of being deleted, the parts information judged to be the same pieces of parts information may be excluded from transmission information generated by the transmission information generator 158.

The transmission information generator 158 generates the transmission information including the master acquisition information held by the information holder 156. When the information judging unit 157 judges the same pieces of parts information are present, the transmission information generator 158 generates the transmission information including the organized master acquisition information.

When the reception judging unit 155 judges that the parts information of the identification devices 30A and 30B are not acquired, the transmission information generator 158 generates error information (operational information) including information indicating the reader 15 (15A) to which the identification device 30A belongs and information indicating an operational state of the reader 15 (information indicating that communication between the reader 15 and the identification devices 30 is failed).

Further, when the reception judging unit 155 judges that the information from the reader 15B serving as the slave reader is not received within a predetermined time (i.e., when it is judged that the reader 15B is not normally operated), the transmission information generator 158 generates error information (operational information) including information indicating the reader 15 (15B) and information indicating an operational state of the reader 15 (information indicating that the reader 15B is not normally operated).

In addition, when the information judging unit 157 judges that the error information is contained in the information (slave acquisition information) received from the reader 15 (15B) serving as the slave reader, the transmission information generator 158 generates error information to be transmitted to the communication controller 200 based on the acquired error information. The information indicating the reader 15 (15B) as a transmission source and the information indicating the operation state of the reader 15 (information indicating that communication between the reader 15 and the identification devices 30 is failed), which are contained in the acquired error information, are to be transmitted as the error information to the communication controller 200.

The information transmitter 159 transmits the transmission information or the error information generated by the transmission information generator 158 to the communication controller 200 described later. The information transmitted by the information transmitter 159 corresponds to the acquisition information of the invention.

The reader 15B is provided in the engine compartment 5A2. The reader 15B is supposed to communicate with the identification device 30C attached to the filter 20C and the identification device 30D attached to the engine EG. Specifically, the reader 15B communicates with the identification devices 30C and 30D supposed to be positioned within the communication range of the reader 15B. The reader 15B executes a process of reading the parts information from the identification devices 30C and 30D under control by the reader 15A.

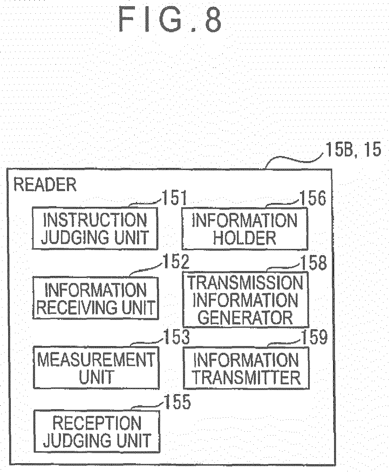

Fig. 8 is a block diagram showing a configuration of the reader 15B serving as the slave reader.

The reader 15B is configured in the same manner as the reader 15A except that some units are omitted. Specifically, as shown in Fig. 8, the reader 15B includes the above-described instruction judging unit 151, information receiving unit 152, measurement unit 153, reception judging unit 155, information holder 156, transmission information generator 158 and information transmitter 159.

Then, the information holder 156 of the reader 15B holds the slave acquisition information including the parts information included in the electric waves received by the information receiving unit 152 from the identification devices 30C, 30D, and the received strength measured by the measurement unit 153, which are associated with each other.

The transmission information generator 158 of the reader 15B generates transmission information based on the slave acquisition information held by the information holder 156. The information transmitter 159 transmits the transmission information to the reader 15A serving as the master reader. When the reception judging unit 155 judges that the parts information is not acquired from the identification devices 30 (30C, 30D) that are target parts of which parts information is acquired, the transmission information generator 158 of the reader 15B also generates the above error information and the information transmitter 159 transmits the error information.

In the exemplary embodiment, the reader 15B does not include the slave control unit 154 and the information judging unit 157 as described above. However, the reader 15B may have the slave control unit 154 and the information judging unit 157, where the slave control unit 154 and the information judging unit 157 are non-functional.

The information receiving unit 152 of the readers 15 communicates with the IC tags 301 of each of the identification devices 30, for instance, via electric waves in the UHF zone at 900 MHz. Since the readers 15 can communicate with the identification devices 30 (30A, 30B, 30C and 30D) that are about 1 m away from the readers 15 when the frequency of the electric waves falls within the above frequency zone, the readers 15 can be used even in the pump compartment 5A1 and the engine compartment 5A2.

In the exemplary embodiment, the readers 15 in a form of a reading device are used as communication devices. However, the reader 15 may be replaced by a reader-writer (reading and writing device) having a function of reading information from the identification device 30 and a function of writing information to the identification device 30.

Although two readers 15 (15A, 15B) are provided in the exemplary embodiment, only the reader 15A may be provided. Alternatively, the readers 15 may be provided by three or more readers including the readers 15A and 15B. Since a communication condition between the reader 15 and each of the identification device 30 depends on a relative positional relationship therebetween, with a plurality of readers 15, the parts information stored in the IC tag can be read with higher probability.

### Description of Each Controller

As shown in Fig. 6, in addition to the above configuration, the hydraulic excavator 1 (working vehicle) further includes the communication controller 200, the readers 15A and 15B, an engine controller 211, a pump controller 212 and a monitor 213 and an in-vehicle network 210 that connects the communication controller 200, readers 15A and 15B, engine controller 211, pump controller 212 and monitor 213 to allow data communication therebetween.

The engine controller 211 is configured to adjust a fuel amount to be supplied to the engine EG to control output of the engine EG. The pump controller 212 is configured to control output of the pump PN.

The monitor 213 has a display function of displaying a remaining amount of the fuel, failure information of the hydraulic excavator 1 and the like, and also has an input function of setting the operation of the hydraulic excavator 1. The monitor 213 includes an SMR (service meter) that measures an operational duration of the engine EG of the hydraulic excavator 1, the SMR being displayed on the monitor 213. Information of the SMR (information of accumulated operational duration) is transmitted to the management center 110 through the communication controller 200 and the communication network 120.

The communication controller 200 has a communication terminal 202 connected to an antenna 201 in order to allow intercommunication with the management center 110 via a later-described communication network 120. The communication controller 200 serves as a controller for controlling the operations of the controllers 211 and 212, the monitor 213 and the readers 15. The communication controller 200 also serves as a processor for processing the information acquired from the readers 15. Further, the communication controller 200 serves as a transmitter for transmitting the information acquired from the readers 15 to the management server 111 of the management center 110 through the communication network 120. In other words, the communication controller 200 corresponds to the transmitter of the invention.

Accordingly, the communication controller 200 includes a storage for storing data acquired by the readers 15 and a program of processing the data. For instance, the program executes a process of comparing the data newly acquired by the readers 15 with the data stored in the storage. The communication controller 200 includes an arithmetic unit for executing such a process.

In the exemplary embodiment, the communication controller 200 activates the readers 15 when an operator of the hydraulic excavator 1 turns ON a key switch (not shown) to start the engine EG. In order to activate the readers 15, it is only required to turn the key switch to an accessory position to supply electric power from a battery (not shown) to electronic devices such as the communication controller 200 and the readers 15. In other words, the engine EG is not necessarily started in order to operate the readers 15.

A timing of activating the readers 15 is not limited to the above. For instance, a timer function may be provided to the communication controller 200 and the communication controller 200 may be set to activate the readers 15 at a predetermined timing (e.g., once per day or once per week). In other words, the readers 15 may be activated on a regular basis to receive the parts information from the identification devices 30.

Alternatively, the communication controller 200 may activate the readers 15 in response to an operational instruction by the operator. Specifically, when the operator operates the operational button for generating a predetermined start signal, the communication controller 200 may activate the readers 15 on receiving the start signal.

Further alternatively, the communication controller 200 may activate the readers 15 in response to an operational instruction by an administrator of the management center 110 described later. Specifically, the communication controller 200 may be configured to activate the readers 15 when the administrator transmits a predetermined start signal from the management enter 110 to the hydraulic excavator 1 via the communication network 120 and the communication controller 200 receives the start signal. Alternatively, instead of the operational instruction by the administrator, a start signal generation program for generating a start signal in a predetermined cycle may be executed by the management server 111 in the management center 110, thereby automatically transmitting the start signal to the hydraulic excavator 1.

In addition, a sensor may be provided to each of the filter heads 13A and 13B to detect attachment and detachment of the respective filters 20A, 20B and 20C (in which a filter head to be attached with the filter 20C is not shown), so that the readers 15 may be activated in response to the output from the sensor.

The communication controller 200 processes the data acquired by the readers 15 as described above. For instance, the communication controller 200 compares the above acquired data with the stored data. When the communication controller 200 judges that data is newly acquired, the communication controller 200 updates the stored data with the newly acquired data. Such a comparison process may be conducted in the management server 111 described later.

When the communication controller 200 transmits the data read by the identification devices 30 to the management server 111 of the management center 110 via the communication network 120, the communication controller 200 simultaneously transmits date-time data, vehicle type information indicating the type of the working vehicle on which the communication controller 200 is provided, and vehicle unique information (e.g. ID) unique to the working vehicle. Accordingly, the management server 111 can recognize the transmission source (i.e. one of the working vehicles) of the received information. It should be noted that the communication controller 200 includes, for instance, a timepiece IC (not shown) and can acquire the date-time data with the timepiece IC.

The date-time data may be exemplified by date and time when the readers 15 are activated (date and time when electric waves are transmitted), date and time when the readers 15 read the data of the identification devices 30, and date and time when the data of the identification devices 30 is transmitted to the management server 111. The date-time data may be replaced by data indicating a date or data indicating a time.

Note that a controller (e.g., the pump controller 212) other than the communication controller 200 or the readers 15 may have the above-described functions of the communication controller 200. For instance, when the reader 15 (15A) is capable of transmitting information to the management server 111, the reader 15 serves as the communication device and transmitter of the invention. When another controller has the information transmission function, the controller serves as the transmitter of the invention.

### Arrangement of Management Center

As shown in Fig. 6, the management center 110 includes the management server 111 that integrally manages various information including parts information acquired by each of the working vehicles.

The management server 111 includes a large-volume storage including hard disks and the like. The management server 111 can mutually communicate with a display 112 including monitor and the like, a communication device 113 capable of wireless communication or wired communication, and the like. The management server 111 manages and stores, for instance, the above parts information received from the hydraulic excavator 1, the information about the accumulated operational duration, and the like via the communication network 120. It should be noted that the management server 111 may be disposed at a site at which the working vehicle is operated, or may be disposed at a location remote from the site at which the working vehicle is operated. The management server 111 may be accessible by the administrator of the management server 111 or may be accessible by another administrator such as an administrator of the working vehicle and a maintenance worker of the working vehicle.

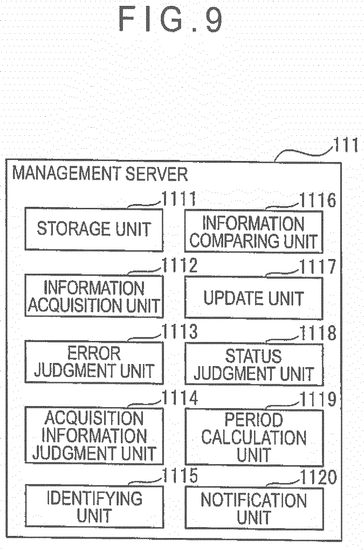

Fig. 9 is a block diagram showing a configuration of the management server 111.

Specifically, as shown in Fig. 9, the management server 111 includes a storage unit 1111 including the large-volume storage, and units operative when a program stored in the storage unit 1111 is run by a CPU (Central Processing Unit), the units including an information acquisition unit 1112, an error judgment unit 1113, an acquisition information judgment unit 1114, an identifying unit 1115, an information comparing unit 1116, an update unit 1117, a status judgment unit 1118, a period calculation unit 1119 and a notification unit 1120.

The storage unit 1111 stores the program and data necessary for managing the parts information by the management server 111. For instance, the storage unit 1111 stores therein a parts information management program for performing the later-described parts information management process. In addition, the storage unit 1111 stores a database in which the type and number of parts (e.g. the filter 20) of each of the types of the working vehicles are stored. In other words, the storage unit 1111 stores the type information and the number of parts of the target part in association with each other. The type of the working vehicle refers to the kind of the working vehicle (e.g. hydraulic excavator and bulldozer). The type of the parts refers to the kind of the parts (e.g. oil filter and fuel pre-filter).

Further, the storage unit 1111 stores the acquisition information including the parts information and the received strength received from each of the working vehicles in association with the vehicle unique information of the working vehicle. It should be noted that the vehicle unique information may be a manufacturing number allocated to each of the working vehicles, or a serial number allocated to each of the communication controllers 200. In other words, it is only necessary for the vehicle unique information to be capable of distinguishing one of the working vehicles from the other working vehicles. At this time, the storage unit 1111 stores the TID and EPC contained in the received parts information in association with each other. Accordingly, by cross-checking the newly acquired parts information, which is a combination of the TID and EPC read from the IC tag 301, and the stored parts information (data), the management server 111 can judge whether or not the part (e.g., the filter 20) of the working vehicle is replaced and whether or not the replaced part is a genuine (official) product. By such a cross-checking, a time elapsed after the part is attached to the working vehicle can be grasped. Accordingly, for instance, the management server 111 can manage a replacement timing of the filter 20.

The information acquisition unit 1112 receives the acquisition information transmitted from the working vehicle (sometimes referred to as server acquisition information, hereinafter). It should be noted that, since the same pieces of parts information are merged in the processing in the reader 15A, the server acquisition information does not include the same pieces of the parts information. However, the management server 111 (for instance, the information acquisition unit 1112) may perform the organizing process (merging process) as described above.

The error judgment unit 1113 judges whether or not error information is included in the server acquisition information. When it is judged that the error information is included in the server acquisition information by the judgment process, the error information is outputted by the later-described notification unit 1120.

The acquisition information judgment unit 1114 judges the contents of the server acquisition information.

Here, the pieces of parts information having the same item number (the type information of the target part) and different serial number (the unique information of the target part) are defined as pieces of parts information of the same type. The item number (type information) represents the kind of the parts (e.g. oil filter and fuel pre-filter), as described above. The serial number (e.g. manufacturing number) is unique to each of the parts (even with the same type of parts), as described above.

The acquisition information judgment unit 1114 performs an information-number judgment process, in which whether or not the server acquisition information includes more number of pieces of parts information of the same type than the number of target parts (number of parts) provided at a preset installation position in the working vehicle and supposed to be attached with the identification device 30.

Fig. 10 illustrates an example of the server acquisition information.

Specifically, in the information-number judgment process, the acquisition information judgment unit 1114 judges whether or not the pieces of parts information of the same type are included in the server acquisition information.

For instance, the parts A1 and A2 shown in Fig. 10, which have the same item number (type information), have different serial numbers (unique information). When the parts information of each of the parts A1 and A2 are acquired from the working vehicle, the acquisition information judgment unit 1114 judges that the parts information of the part A1 and the parts information of the part A2 are the pieces of parts information of the same type and that there are two pieces of parts information of the same type.

When the acquisition information judgment unit 1114 judges that the pieces of parts information of the same type are present, the acquisition information judgment unit 1114 acquires from the storage unit 1111 the number of parts corresponding to the item number included in the pieces of parts information of the same type for the corresponding working vehicle. Then, the acquisition information judgment unit 1114 judges whether or not the number of the pieces of parts information of the same type is the same as the acquired number of parts.

When it is judged in the judgment process that the acquired number of parts is not the same as the number of parts stored in the storage unit 1111, the acquisition information judgment unit 1114 further judges whether or not the number of the pieces of parts information of the same type is larger than the number of parts.

The number of the pieces of parts information of the same type is judged to be larger than the number of parts when, for instance, the filter 20A is already attached to the filter head 13A and, in addition, one or more of the same type of the filter 20A (the filter 20A not attached to the filter head 13A) is present. In contrast, the number of the pieces of parts information of the same type is judged to be smaller than the number of parts when, for instance, a filter in a form of an imitation (a part not attached with the identification device 30) is attached to the filter head 13A, or a filter attached with an improper identification device 30 is provided.

Specifically, when the number of each of an oil filter, a fuel filter and a fuel pre-filter installed in a certain working vehicle is "1", the number of the target part (number of parts) is "3." The number of parts is stored in the storage unit 1111.

In contrast, when the parts information of the parts A1 to A4 shown in Fig. 10 is acquired from the working vehicle, the number of the pieces of parts information of the same type is "4." In this case, if the number of the actual target parts (number of parts) is "3" as mentioned above, more number of pieces of parts information of the same type than the number of the target parts are included in the parts information. Focusing only on the oil filter, since the working vehicle is designed to have only one oil filter, the actual number of parts is "1". In contrast, the parts information indicates that the number of parts is "2" (i.e. the parts A1, A2).

Specifically, in this instance, it is judged by the acquisition information judgment unit 1114 that the server acquisition information includes two pieces of parts information of the same type and that more number of pieces of parts information of the same type than the supposed number of parts (i.e. the number of the oil filter) stored in the storage unit 1111 are present in the server acquisition information.

Referring back to Fig. 9, when the acquisition information judgment unit 1114 judges that the number of the pieces of parts information of the same type is more than the number of parts, the identifying unit 1115 identifies, based on the received strength associated with the pieces of parts information of the same type, at least one of the part provided at corresponding installation position and a part(s) not provided at the installation position.

Specifically, the identifying unit 1115 acquires, from among the received strengths previously acquired and stored in the storage unit 1111, the received strengths (stored received strengths) stored in association with the parts information of the parts of the item number identified as the pieces of parts information of the same type. Then, the identifying unit 1115 identifies one or more of the newly acquired pieces of parts information of the same type, which is associated with the received strength whose difference from the stored received strength is within a predetermined range, as the parts information of the parts disposed at the corresponding installation position (e.g. the filter 20A attached to the filter head 13A). Further, the identifying unit 1115 identifies one or more of the pieces of parts information of the same type, which is associated with the received strength whose difference is out of the predetermined range, as the parts information of the parts not provided at the corresponding installation position (e.g. the filter 20A left uncollected in the vicinity of the filter head 13A).

In other words, the identifying unit 1115 identifies one or more of the pieces of parts information of the same type included in the received server acquisition information as the parts information of the part disposed at the installation position, the one or more of the pieces of parts information of the same type having the received strength close to the received strength previously acquired in association with the parts information of the same type information as the pieces of parts information of the same type. Further, the identifying unit 1115 identifies one or more of the pieces of parts information of the same type associated with the received strength whose difference from the previously acquired received strength is large, as the parts information of the part provided at a position different from the installation position.

The later-described notification unit 1120 notifies the administrator of these identified parts information. It should be noted that whether or not the difference between the received strength associated with the newly acquired pieces of parts information of the same type and the stored received strength is within the predetermined range is judged by the later-described status judgment unit 1118.

It is assumed that the received strength of the identification device 30A of the oil filter 20A stored in the storage unit 1111 is "11" and the above predetermined range is ±3.

In the example shown in Fig. 10, the server acquisition information includes the received strength of "10" for the part A1 and the received strength of "2" for the part A2. The newly acquired received strength related to the part A1 (the oil filter) is "10" relative to the value "11" stored in the storage unit 1111. Thus, it is found that the difference between the received strengths is "1", which shows that the received strength related to the part A1 is within the above predetermined range. However, the received strength related to the part A2 (also the oil filter) is "2" relative to the value "11" stored in the storage unit 1111. Thus, it is found that the difference between the received strengths is "9", which shows that the received strength related to the part A2 is out of the above predetermined range. Accordingly, it is speculated that the part A2 (oil filter) is left uncollected in the vicinity of the filter head 13A.

It should be noted that the parts information of the part provided at the corresponding installation position cannot be identified in the identification process by the identifying unit 1115 when each of the received strengths associated with the pieces of parts information of the same type is out of the predetermined range.

For instance, in an instance where an imitation or a filter attached with an improper identification device 30 is attached to the corresponding installation position and genuine product(s) (i.e. a part attached with the identification device 30) of a number exceeding the number of parts is left uncollected in the vicinity of the installation position, the parts information of the part provided at the installation position cannot be acquired. In addition, the received strength of the electric wave received from the identification device 30 attached to the genuine product may be out of the predetermined range. As described above, the part provided at the installation position cannot be identified. In the above instance, the identifying unit 1115 identifies, from among the acquired pieces of the parts information, a part (the genuine product left uncollected in the vicinity of the installation position) that is possibly not provided at the corresponding installation position, in other words, the part left uncollected in the vicinity of the installation position, and corresponding one of the pieces of the parts information is outputted by the later-described notification unit 1120.

Referring back to Fig. 9, the information comparing unit 1116 is operative when the acquisition information judgment unit 1114 judges that the server acquisition information does not include the pieces of parts information of the same type or when the number of the pieces of parts information of the same type is the same as the number of parts. The information comparing unit 1116 judges whether or not each of the parts information (newly acquired parts information) included in the server acquisition information is the same as the parts information (the parts information stored in association with the corresponding vehicle unique information) already stored in the storage unit 1111. In the exemplary embodiment, the information comparing unit 1116 judges that the parts information included in the server acquisition information is the same as the stored parts information when the item number and the serial number in each of the parts information are the same. On the other hand, when the serial numbers are not the same, it is judged that the pieces of the parts information are not the same.

When the information comparing unit 1116 judges that the pieces of the parts information are not the same, the update unit 1117 updates the parts information stored in the storage unit 1111 with the newly acquired parts information. At this time, the update unit 1117 also updates the received strength stored in association with each of the pieces of the parts information. Thus, the latest parts information is held (stored) in the management server 111 in association with the received strength.

When the information comparing unit 1116 judges that the pieces of the parts information are the same, the status judgment unit 1118 judges the disposition status of each of the parts based on the received strength associated with each of the parts information.

Specifically, the status judgment unit 1118 makes the following judgment.

The status judgment unit 1118 performs a first judgment process of judging whether or not a difference between the received strength included in the server acquisition information and associated with each of the pieces of the parts information and the received strength stored in the storage unit 1111 and associated with the corresponding parts information is within a predetermined range (within a predetermined error range). It should be noted that whether or not the received strength associated with each of the pieces of the parts information exceeds the predetermined range expected in advance may be judged in the first judgment process. In such an arrangement, the predetermined range is exemplified by a range defined around the received strength of the electric wave supposed to be outputted from the identification device 30 attached to a genuine product disposed at the corresponding installation position including with a margin of a temporary variation (error) caused due to an environmental factor. Accordingly, the width of the predetermined range can be determined by performing experiment(s) and test(s) in advance.

Further, the status judgment unit 1118 performs a second judgment process of judging, when it is judged in the first judgment process that the predetermined range is exceeded, whether or not the duration of the state in which the difference exceeds the predetermined range exceeds a predetermined period.

If a target part attached with the imitation or an improper identification device 30 (collectively referred to as imitation or the like hereinafter) is disposed at the corresponding installation position and the genuine product is disposed (uncollected) in the vicinity of the installation position, it is possible that the parts information is acquired from the identification device 30 attached to the genuine product. In this case, if no countermeasure is taken, it may be erroneously judged that the genuine product is provided at the installation position. However, the received strength of the electric wave from the genuine product disposed in the vicinity of the installation position is different from the received strength of the electric wave received from the identification device 30 of the genuine product disposed at the correct installation position in the past. On the other hand, the received strength temporarily changes due to the environmental factor as mentioned above.

Accordingly, if the received strength of the electric wave including certain parts information exceeds the predetermined range for the predetermined period that is set for a relatively long term, it is suspected that the imitation or the like is provided at the installation position instead of the genuine product. Thus, for notification of the above possibility, the status judgment unit 1118 performs the above second judgment process to output error information (second malfunction information) by the later-described notification unit 1120 when the duration of the state in which the difference exceeds the predetermined range exceeds the predetermined period.

When it is judged that the difference in the received strength exceeds the predetermined range in the first judgment process by the status judgment unit 1118, the period calculation unit 1119 calculates the duration in which the difference exceeds the predetermined range. Specifically, each time it is judged that the difference exceeds the predetermined range in the first judgment process, the period calculation unit 1119 adds to the duration a difference in time period between the date indicated by the date-time data included in previously acquired server acquisition information and the date indicated by the date-time data included in the currently acquired server acquisition information. Further, when it is judged that the difference does not exceed the predetermined range in the first judgment process by the status judgment unit 1118, the period calculation unit 1119 initializes the duration.

The duration is calculated by the period calculation unit 1119 for each of the parts (i.e. for each of the pieces of the parts information corresponding to the parts).

The notification unit 1120 notifies each of the administrator and the like including the administrator of the management server 111. the administrator of the hydraulic excavator 1 and a maintenance worker of the hydraulic excavator 1 of various information. The notification may be made to one of the administrator and the like, or may be made to a plural ones of the administrator and the like. In the exemplary embodiment, the notification unit 1120 is configured to display the information on the display 112 connected with the management server 111 to notify the administrator and the like of the information. However, the administrator and the like may be notified of the information through the other process. In addition, the various information may be outputted from the management server 111 to a portable terminal of the administrator and the like.

The notification unit 1120 outputs the error information when, for instance, the error judgment unit 1113 judges that the error information is present. Thus, the administrator and the like can be notified of the contents of the error (e.g. malfunction of the reader 15 and failure in acquiring the parts information by the reader 15). It should be noted that the contents of the error are not limited to the above. The contents of the notification process of the error information (first malfunction information, second malfunction information) will be described later.

The notification unit 1120 is also configured to output the parts information identified by the identifying unit 1115 and information (first malfunction information) indicating that a part not provided at the installation position may be present. The administrator and the like can thus be notified of the details of the part not provided at an appropriate installation position.

Further, the notification unit 1120 is configured to output, when the status judgment unit 1118 judges that the duration exceeds the predetermined period, the parts information relating to the part whose duration exceeds the predetermined period, and information (second malfunction information) indicating that the target part provided at the installation position may be detached and left uncollected or the target part to be provided at the installation position may be left uncollected. Thus, the administrator and the like can know that an imitation or the like may be disposed at the corresponding installation position and a genuine product may be left uncollected.

### Parts Information Management Process by Management Server

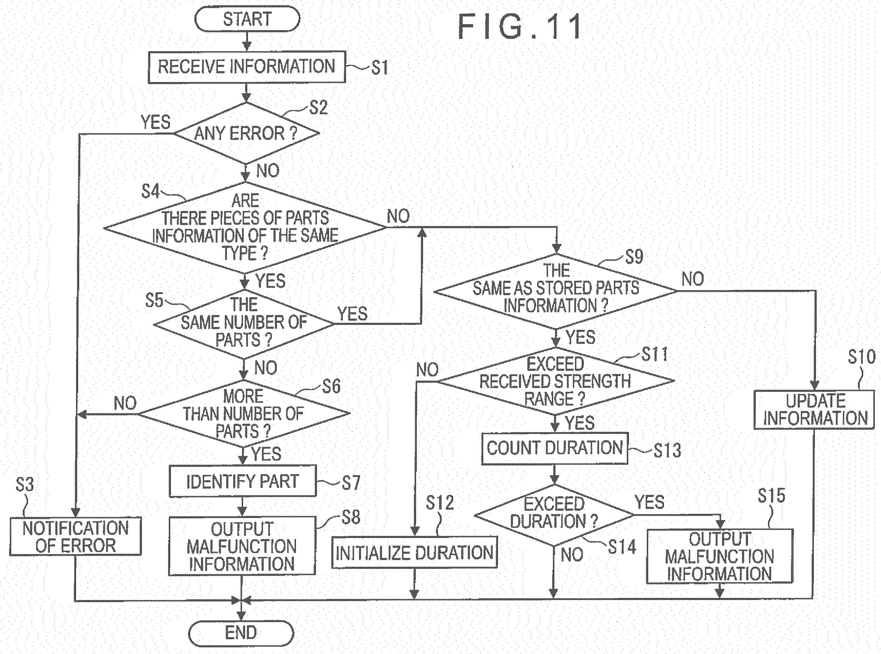

Fig. 11 is a flow chart showing a parts information management process executed in the management server 111.

The management server 111 is configured to run the parts information management program to perform the parts information management process described below. Then, the management server 111 is configured to notify the administrator and the like of the parts information of the part that may be not provided at the corresponding installation position. The parts information management process is a process including the steps included in the parts information management method of the invention.

Specifically, in the parts information management process shown in Fig. 11, the information acquisition unit 1112 of the management server 111 receives and acquires the information (server acquisition information) transmitted from the working vehicle such as the hydraulic excavator 1 (Step S1).

Subsequently, the error judgment unit 1113 judges whether or not the acquired information (server acquisition information) includes the error information (Step S2).

When it is judged in the judgment process in Step S2 that the error information is included (Step S2, YES), the notification unit 1120 outputs error contents including the error information (Step S3).

After the Step S3, the management server 111 ends the parts information management process.

In contrast, when it is judged in the judgment process in Step S2 that the error information is not included (Step S2, NO), the acquisition information judgment unit 1114 judges whether or not the parts information to be identified as the pieces of parts information of the same type is included in the server acquisition information (Step S4).

When it is judged in the judgment process in Step S4 that the pieces of parts information of the same type are not included (Step S4, NO), the management server 111 proceeds to a process in Step S9.

On the other hand, when it is judged in the judgment process in Step S4 that the pieces of parts information of the same type are present (Step S4, YES), the acquisition information judgment unit 1114 judges whether or not the number of the pieces of parts information of the same type is the same as the number of parts (the number of the target part installed in the working vehicle acquired from the storage unit 1111 based on the vehicle identification information of the working vehicle and the type information included in the pieces of parts information of the same type) stored in the storage unit 1111 (Step S5).

When it is judged in the judgment process in Step S5 that the number of the pieces of parts information of the same type are the same as the number of parts (Step S5. YES), the management server 111 proceeds to a process in Step S9.

When it is judged in the judgment process in Step S5 that the number of the pieces of parts information of the same type is not the same as the number of parts (Step S5, NO), the acquisition information judgment unit 1114 further judges whether or not the number of the pieces of parts information of the same type is larger than the number of parts (Step S6).

When it is judged in the judgment process in Step S6 that the number of the pieces of parts information of the same type newly acquired from the working vehicle is smaller than the number of parts stored in the storage unit 1111 (Step S6, NO), the management server 111 proceeds to the process in Step S3. In Step S3, the notification unit 1120 outputs information indicating that an appropriate number of pieces of parts information cannot be acquired for the corresponding working vehicle and information indicating that a part attached with an imitation or an improper identification device 30 may be present. Then, the management server 111 ends the parts information management process.

On the other hand, when it is judged in the judgment process in Step S6 that the number of the pieces of parts information of the same type is larger (Step S6, YES), the identifying unit 1115 identifies at least one of the parts information of the part provided at the appropriate installation position and the parts information of the part not provided at the installation position based on the received strength of the parts information (Step S7).

Subsequently, the notification unit 1120 outputs the identified parts information and the above first malfunction information (Step S8).

After the Step S8, the management server 111 ends the parts information management process.

When it is judged in Step S5 that the number of the pieces of parts information of the same type is the same as the number of parts (Step S5, YES) as described above, the parts information management process proceeds to a process in Step S9.

In Step S9, the information comparing unit 1116 judges whether or not the parts information included in the server acquisition information is the same as the corresponding stored parts information (Step S9).

When it is judged in the judgment process in Step S9 that the pieces of the parts information are not the same (Step S9. NO), the update unit 1117 updates the stored parts information for the corresponding part with the parts information judged to be not the same (Step S10). At this time, the update unit 1117 also updates the received strength associated with each of the pieces of the parts information as described above.

After the Step S10, the management server 111 ends the parts information management process.

In contrast, when it is judged in the judgment process in Step S9 that the pieces of the parts information are the same (Step S9, YES), the status judgment unit 1118 performs the above first judgment process (Step S11). Specifically, in Step S11, the status judgment unit 1118 judges whether or not the difference between the received strength included in the server acquisition information and associated with each of the pieces of the parts information and the received strength already stored in association with the corresponding parts information exceeds the predetermined range (a predetermined error range).

When it is judged in the judgment process in Step S11 that the difference does not exceed the above predetermined range (Step S11, NO), the duration (counted in the later-described Step S13) corresponding to the received strength judged not to exceed the predetermined range is initialized by the period calculation unit 1119 (Step S12). In other words, the period calculation unit 1119 sets the corresponding duration at "0" in Step S12.

It should be noted that, when it is judged in the judgment process in Step S11 that all of the received strengths do not exceed the predetermined range, the management server 111 ends the parts information management process after Step S12.

In contrast, when it is judged in the judgment process in Step S11 that the difference exceeds the above predetermined range (Step S11, YES), the duration corresponding to the received strength judged to exceed the predetermined range is recounted by the period calculation unit 1119 by being added with the difference in time period (Step S13).

Subsequently, the status judgment unit 1118 performs the above second judgment process to determine the presence of the duration exceeding the predetermined period (Step S14).

When it is judged in the judgment process in Step S14 that the received strength exceeding the predetermined period is not present (Step S14, NO), the management server 111 ends the parts information management process.

In contrast, when it is judged in the judgment process in Step S14 that the duration exceeding the predetermined period is present (i.e. when it is judged that the time elapsed after exceeding the predetermined range continues for the predetermined period) (Step S14, YES), the notification unit 1120 outputs the corresponding parts information and the second malfunction information (Step S15).

After the Step S15, the management server 111 ends the parts information management process.

The management server 111 performs the above-described parts information management process to output the malfunction information, for instance, in the following circumstances.

In the hydraulic excavator 1. a genuine filter (sometimes referred to as an uncollected filter hereinafter) of the same type as the filter 20A is sometimes left uncollected in the vicinity of the filter head 13A on which the filter 20A (oil filter) is provided. The uncollected filter may be a used genuine filter, or an unused genuine filter. In this case, the reader 15A acquires the parts information of the same item number and different serial numbers from the identification device 30 attached to each of the filter 20A and the uncollected filter. The management server 111 judges, upon receipt of the information including the parts information (server acquisition information), that the received information includes two pieces of parts information of the same type if the server acquisition information does not include the error information.

Since the number of the oil filter provided in the hydraulic excavator 1 is actually "1", it is judged that the number of the pieces of parts information of the same type acquired by the management server 111 is larger than the number of the oil filter. In this case, one of the pieces of the parts information (pieces of parts information of the same type) of the filter 20A and the uncollected filter that is associated in the past with the received strength close to the received strength of the electric wave received from the identification device 30 of the oil filter is identified as the parts information of the filter provided to the filter head 13A and the rest of the pieces of the parts information is identified as the parts information of the uncollected filter. Accordingly, the filter 20A is identified as the filter provided on the filter head 13A and the filter left uncollected in the vicinity of the filter head 13A is identified as the uncollected filter. Then, the information (first malfunction information) indicating that the filter 20A is provided on the filter head 13A and the uncollected filter may be present is outputted by the notification unit 1120.

It some instances, for example, a non-genuine filter (i.e. a filter of the same type as that of the filter 20A but without the identification device 30 or attached with improper identification device 30) is attached to the filter head 13A and a plurality of used or unused filters 20A are left uncollected in the vicinity of the filter head 13A. In this case, though the number of the pieces of parts information of the same type is larger than the number of parts, the parts information cannot be acquired from the imitation or the like. Accordingly, the filter provided on the filter head 13A cannot be identified and the filters 20A left uncollected in the vicinity of the filter head 13A are identified. In this case, information indicating that a plurality of the filters 20A may be left uncollected is outputted.

As discussed above, when the number of the pieces of parts information of the same type is larger than the number of corresponding parts, at least the parts information of the part that is judged to be left uncollected and the information indicating that the part may be left uncollected are outputted.

Alternatively, the imitation or the like may be provided at the corresponding installation position and the genuine product may be disposed (left uncollected) at a position different from the installation position in the working vehicle. By way of an example, the hydraulic excavator 1 may be provided with the imitation or the like on the filter head 13A and a single filter 20A may be disposed in the vicinity of the filter head 13A. In this case, it is possible that the reader 15A acquires the parts information of the filter 20A. Without any countermeasures, it is possible that the genuine filter 20A is erroneously recognized to be provided on the filter head 13A.

However, the magnitude of the received strength of the electric wave received from the identification device 30A of the filter 20A provided on the filter head 13A is different from the magnitude of the received strength of the electric wave received from the identification device 30A provided on the filter 20A disposed in the vicinity of the filter head 13A.

On the other hand, the received strength temporarily changes due to the environmental factor as discussed above. Accordingly, it is sometimes impossible to determine that the filter 20A is provided at a different (i.e. inappropriate) position from the filter head 13A simply because the received strength of the electric wave from the identification device 30A changes.

In contrast, if the difference between the received strength associated with the acquired parts information and the received strength corresponding to the parts information and acquired in the past exceeds the predetermined range over the duration exceeding the predetermined period, it is presumable that the change in the received strength is not temporarily caused due to the environmental factor but is caused because the filter 20A is disposed at a position different from the filter head 13A. In this case, the information (second malfunction information) indicating that the filter 20A may not be provided at an appropriate installation position (e.g. on the filter head 13A) but may be left uncollected is outputted.

### Advantage(s) of Embodiment(s)

According to the above described the parts information management system 100 in the exemplary embodiment, the following advantages can be attained.

When the acquisition information judgment unit 1114 judges that the acquired server acquisition information includes the pieces of parts information of the same type and the number of the pieces of parts information of the same type is larger than the number of the corresponding part(s) supposed to be provided at the actual installation position of the working vehicle, the notification unit 1120 outputs the above first malfunction information. With such an arrangement, the administrator and the like of the management server 111 can be notified of the possibility of the presence of the part being left uncollected without being provided at the corresponding installation position.

The number of the target part (number of parts) to be provided at the preset installation position in the working vehicle is stored in the storage unit 1111 in advance for each of the types of the working vehicles. Accordingly, the number of the pieces of parts information of the same type acquired by the acquisition information judgment unit 1114 from a working vehicle can be easily and appropriately compared with the number of parts corresponding to the type information included in the pieces of parts information of the same type. Thus, the presence of the target part not provided at the installation position can be appropriately determined.

The measurement unit 153 of the reader 15 (communication device) measures the received strength of the electric wave received from the identification device 30 and the communication controller 200 (transmitter) transmits the acquisition information in which the parts information and the received strength are associated with each other to the management server 111. In the management server 111, based on the received strength included in the acquired server acquisition information and the received strength acquired in the past, the identifying unit 1115 identifies the parts information of the part not provided at the installation position. Subsequently, the notification unit 1120 outputs the identified parts information together with the first malfunction information. According to the above arrangement, not only the presence of the uncollected part but also the parts information of the part left uncollected without being provided at the installation position can be outputted. Thus, the details of the part are understandable. In other words, the used or unused part that is actually left uncollected can be kept from being incorrectly recognized to be provided at the installation position, thereby achieving correct replacement timing management and collection management of the target part.

In the management server 111, when the status judgment unit 1118 judges that the difference between the acquired received strength and the received strength acquired in the past exceeds the predetermined range for the duration exceeding the predetermined period, the notification unit 1120 outputs the second malfunction information. According to the above arrangement, the administrator and the like can recognize the possibility that the target part provided at the installation position is detached and left uncollected in the vicinity of the installation position or the possibility that the unused target part is left uncollected in the vicinity of the installation position. Accordingly, the management of the replacement timing of the target part and collection of unnecessary target part can be appropriately performed.

The parts information management system 100 includes the working vehicle such as the hydraulic excavator 1, the management center 110, and the communication network 120 wirelessly connecting the parts information management system 100 and the working vehicle. With the above arrangement, the parts information of the replacement part provided in the working vehicle can be managed via the communication network 120 by the management center 110 remote from the working vehicle.

### Modification(s)

The scope of the invention is not limited to the above exemplary embodiment but includes modifications and improvements as long as the modifications and improvements are compatible with an object of the invention.

In the above exemplary embodiment, the pieces of the parts information having the same item number (type information) and the same serial number (unique information) of the target part (e.g. the filter 20) are identified as the same pieces of parts information indicating the same parts information, and the pieces of the parts information having the same item number (type information) and different serial number (unique information) of the target part are identified as the pieces of parts information of the same type. However, the definition of the information in the invention is not limited to the above. Specifically, whether or not the pieces of the parts information have the same contents and whether or not the pieces of the parts information are of the same type may be judged based on other information. For instance, the information unique to the identification device 30 or the IC tag 301 (e.g. the TID) may be used as the unique information. In this case, if the combination of the item number and TID is known for each of the target parts, the target part can be distinguished from the other target parts of the same type based on the combination. Accordingly, the parts information having the same item number and different TID is also usable as the pieces of parts information of the same type. Further, the type information is not necessarily the item number but may be the name of the part or the like.

Further, for instance, the parts information having at least one of the same type information (item number) and the same unique information (serial number) may be identified as the same pieces of parts information (same pieces of the parts information). In a working vehicle (hydraulic excavator 1), when the identification devices 30 are attached to different parts, different type information is allocated to each of the identification devices 30. Accordingly, for instance, when the readers 15A and 15B hold the identification information having the same type information, it can be judged that the readers 15A and 15B receive the same parts information.

Moreover, the unique information of each of the parts is usually different. Accordingly, when the readers 15A and 15B hold the identification information having the same unique information, it can be judged that the readers 15A and 15B receive the same parts information.

In the exemplary embodiment, in view of the possibility that a plurality of the same type of target parts are provided in the working vehicle depending on the type of the working vehicle, the storage unit 1111 stores the number of the target part for each of the working vehicles in advance. However, it is not necessary for the storage unit 111 of the invention to store the number of the target part for each of the working vehicles in advance. Specifically, when the number of each of the types of the target parts is uniformly determined at a predetermined number (e.g. "1"), the number of the target part is not necessarily stored in the storage unit 1111.

In the above exemplary embodiment, when it is judged that more number of the pieces of parts information of the same type than the number of parts are included, the identifying unit 1115 identifies the parts information of the target part not provided at the installation position from among the parts information of the same type based on the corresponding received strength. However, the arrangement of the invention is not limited to the above. Specifically, it is only necessary for the notification unit 1120 to output the first malfunction information, and it is not necessary to output the parts information (identified parts information) of the target part not provided at the installation position.

In the exemplary embodiment, when the status judgment unit 1118 judges that the difference between the received strength associated with each of the pieces of the parts information and the received strength associated with the corresponding parts information and acquired in the past exceeds the predetermined range for the duration exceeding the predetermined period, the notification unit 1120 outputs the second malfunction information. However, the arrangement of the invention is not limited to the above. For instance, the second malfunction information may be outputted when it is judged that the difference between the received strengths exceeds the predetermined range, without performing the above notification process. Further, irrespective of the difference between the received strengths, the second malfunction information may be outputted when it is judged that the received strength continuously exceeds the predetermined range for a predetermined period.

In the above exemplary embodiment, each of the identification devices 30A, 30B and 30C includes at least one IC tag 301. Specifically, each of the identification devices 30A, 30B and 30C may be provided with a single IC tag 301 as in the identification device 30D. Alternatively, each of the identification devices 30A, 30B and 30C may be provided with a plurality of IC tags 301. Moreover, the number of the identification device 30 (i.e. the number of the target parts to which the identification device 30 is attached) provided to the working vehicle is appropriately changeable. Further, the IC tag 301 (identification part) is not necessarily configured as described above, but may be differently configured as long as the IC tag 301 is provided with the IC chip 35.

In the above exemplary embodiment, the identification devices 30A, 30B and 30C are respectively provided to the filters 20A, 20B and 20C, and the identification device 30D is provided to the engine EG. However, the arrangement of the invention is not limited to the above. The target part to which the identification device 30 is attached may be appropriately changeable or increasable. The identification device 30 may be provided to any part (including any device and assembly) of the working vehicle irrespective of whether the target part is a replaceable replacement part or not.

In the above exemplary embodiment, the reader 15A serving as the master reader is disposed in the pump compartment 5A1 of the machine compartment 5A and the reader 15B serving as the salve reader is disposed in the engine compartment 5A2 separated from the pump compartment 5A1 through the partition 5A3 in the machine compartment 5A. However, the arrangement of the invention is not limited to the above. In the working vehicle, the readers 15 are not necessarily disposed in the machine compartment 5A, but may be disposed at any position where the readers 15 can communicate with the identification devices 30 to be removed together with the replacement part. Moreover, the position where the master reader is disposed and the position where the slave reader is disposed are not necessarily separated by a partition (e.g., the partition 5A3).

In the above exemplary embodiment, the reception judging unit 155 of the reader 15A judges that the reader 15B is not normally operated when the transmission information is not received from the reader 15B. However, the arrangement of the invention is not limited to the above. The operational condition of the reader 15B may be judged based on other indexes. For instance, a temperature sensor may be provided in the engine compartment 5A2. When a temperature measured by the temperature sensor falls out of the allowable temperature range of the reader 15, the reader 15B may be judged not to be normally operated.

In the above exemplary embodiment, after the reader 15A receives and acquires the parts information, the reader 15A outputs the instruction information, whereby the reader 15B receives and acquires the parts information. However, the arrangement of the invention is not limited to the above. After the reader 15B serving as the slave reader receives and acquires the parts information, the reader 15A serving as the master reader may receive and acquire the parts information.

In the above exemplary embodiment, the hydraulic excavator 1 (working vehicle) includes two readers 15 in which the reader 15A serves as the master reader and controls the reader 15B serving as the slave reader. The number of the readers 15 is not limited to two but changeable as desired. Further, the reader 15B is not necessarily controlled by the other reader 15 (15A).

Furthermore, only a single reader 15 may be provided to the working vehicle. When there are only a small number of target parts attached to the identification devices, when the target parts are densely provided in a small range, or the like, the single reader 15 is enough to acquire the parts information from all the identification devices on the target parts. Also in such instances, the reader 15 may judge whether or not the acquired parts information contains the parts information having the same identification information, and, when the reader 15 judges that the acquired parts information contains the parts information having the same identification information, the reader 15 may execute the organizing process (merging process). Further, the reader 15 may be configured to be capable of acquiring the received strength of the received electric wave.

In the above exemplary embodiment, the reader 15B has no information judging unit 157 and the information holder 156 of the reader 15B does not execute the organizing process. However, the arrangement of the invention is not limited to the above. Specifically, the reader 15B may also include the information judging unit 157. When the information judging unit 157 judges that the slave acquisition information contains the same parts information, the information holder 156 of the reader 15B may execute the above organizing process of merging the same pieces of parts information contained in the slave acquisition information.

In this case, the same pieces of parts information are merged in the reader 15B when it is judged that the same pieces of parts information is acquired and contained in the slave acquisition information including the parts information that is acquired from the identification devices 30 supposed to be positioned within the communication range or the identification devices 30 supposed to be not positioned within the communication range (e.g., when a filter 20 is provided with identification devices 30 storing the same parts information). Accordingly, when the reader 15B acquires the same pieces of parts information from each of the identification devices, the reader 15B merges the same pieces of parts information and transmits the merged slave acquisition information to the reader 15A. On the other hand, when it is judged that the same pieces of parts information are not included, the reader 15B transmits the held slave acquisition information to the reader 15A.

This arrangement prevents the slave acquisition information to be transmitted to the reader 15A from including the same pieces of parts information. Accordingly, a processing load of the slave acquisition information applied to the reader 15A is reducible. Additionally, since an information volume of the slave acquisition information is reducible, the information volume to be transmitted to the reader 15A is reducible.

On the other hand, when the reader 15B executes the judgment process and the organizing process, the information judging unit 157 of the reader 15A (master reader) may be configured not to execute the above overlapping judgment process to the received slave acquisition information. In this arrangement, as long as the respective communication ranges of the readers 15A and 15B reliably do not overlap with each other, the information judging unit 157 of the reader 15A may execute the above overlapping judgment process only to the parts information acquired by the reader 15A from the identification device 30.

Further, at least one of the management server 111 and the communication controller 200 may execute the overlapping judgment process and the organizing process while the reader 15A and the reader 15B do not execute the overlapping judgment process and the organizing process. In the above modification, the parts information management system 100 includes the identification device 30 (30A, 30B, 30C, 30D) provided to the hydraulic excavator 1, the readers 15 (15A,15B), the communication controller 200 and the management server 111. In this arrangement, the reader 15B transmits the acquired parts information to the reader 15A and the reader 15A transmits the parts information received from the reader 15B and the self-acquired parts information to the communication controller 200. The communication controller 200 may judge whether or not the received parts information includes the pieces of the parts information having the same identification information. When the communication controller 200 judges that the received pieces of the parts information includes the pieces of the parts information having the same identification information, the communication controller 200 may merge the pieces of the parts information having the same identification information and transmit the merged parts information to the management server 111. Alternatively, the management server 111 having received the pieces of the parts information acquired by the readers 15A and 15B via the communication controller 200 may judge whether or not the received parts information includes the parts information having the same identification information. When the management server 111 judges that the received parts information includes the parts information having the same identification information, the management server 111 may merge the pieces of the parts information having the same identification information.

When the reader 15A has a function of the communication controller 200, the reader 15A may directly transmit the parts information to the management server 111.

In the exemplary embodiment, the parts information management system 100 includes the hydraulic excavator 1 (working vehicle). However, the arrangement of the invention is not limited to the above. In other words, it is not necessary for the parts information management system of the invention to notify the administrator and the like of the presence of the uncollected replacement part of the working vehicle. For instance, the invention is applicable to a system for managing a part disposed in a shop or a facility. Further, the working vehicle is not necessarily the hydraulic excavator 1 but may be a construction machine such as a wheel loader, bulldozer, motor grader and dump track, or an industrial vehicle such as a forklift.

### INDUSTRIAL APPLICABILITY

The invention is suitably applicable to, for instance, a parts information management system for managing a part installed or disposed in a working vehicle.

### EXPLANATION OF CODES

1...hydraulic excavator (working vehicle), 13A,13B...filter head (installation position), 15 (15A,15B)...reader (communication device), 20 (20A,20B,20C)...filter (target part), 30 (30A,30B,30C,30D)...identification device. 100...parts information management system, 110...management center, 111...management server (management apparatus). 120...communication network, 153...measurement unit, 200...communication controller (transmitter), 301...IC tag (identification part), 1111...storage unit, 1114...acquisition information judgment unit, 1115...identifying unit, 1118...status judgment unit, 1120...notification unit.

## Claims

1. A parts information management system comprising:
an identification device attached to a target part provided at a predetermined installation position, the identification device being configured to store parts information for identifying the target part;
a communication device configured to wirelessly communicate with the identification device to acquire the parts information;
a transmitter configured to transmit acquisition information comprising the parts information acquired by the communication device; and
a management apparatus configured to manage the acquisition information transmitted from the transmitter, wherein
the parts information comprises: type information indicating a type of the target part; and unique information for distinguishing the target part from target parts of the same type, and
the management apparatus comprises:
an acquisition information judgment unit configured to judge whether or not the received acquisition information comprises more number of pieces of parts information of the same type having the same type information and different unique information than a number of parts defined by a number of the target part provided at the installation position; and
a notification unit configured to output malfunction information when the acquisition information judgment unit judges that the acquisition information comprises more the parts information of the same type than the number of parts.

2. The parts information management system according to claim 1, wherein
the management apparatus comprises a storage unit configured to store the type information and the number of parts in association with each other, and
the acquisition information judgment unit is configured to acquire from the storage unit the number of parts of the target part corresponding to the type information comprised in the pieces of parts information of the same type to judge whether or not more number of the pieces of parts information of the same type than the number of parts are comprised in the acquisition information.

3. The parts information management system according to claim 1 or 2, wherein
the communication device comprises a measurement unit configured to measure a received strength of an electric wave, the electric wave comprising the parts information and being outputted from the identification device to be received by the communication device,
the transmitter is configured to transmit the acquisition information, in which the received strength measured by the measurement unit and the parts information comprised in the electric wave are associated with each other, to the management apparatus,
the management apparatus comprises an identifying unit that is configured to identify one of the parts information of the same type as the parts information of the target part not provided at the installation position, a difference between the received strength associated with the one of the parts information of the same type and the received strength previously acquired for the target part indicated by the type information comprised in the one of the parts information of the same type being out of a predetermined range, when the acquisition information judgment unit judges that more number of the pieces of parts information of the same type than the number of parts is comprised in the acquisition information, and
the notification unit is configured to output the one of the pieces of the parts information identified by the identifying unit together with the malfunction information.

4. A parts information management system comprising:
an identification device attached to a target part provided at a predetermined installation position, the identification device being configured to store parts information for identifying the target part;
a communication device configured to wirelessly communicate with the identification device to acquire the parts information;
a transmitter configured to transmit the parts information acquired by the communication device; and
a management apparatus configured to manage the parts information received from the transmitter, wherein
the parts information comprises type information indicating a type of the target part,
the communication device comprises a measurement unit configured to measure a received strength of an electric wave, the electric wave comprising the parts information and being outputted from the identification device to be received by the communication device,
the transmitter is configured to transmit the received strength measured by the measurement unit and the parts information comprised in the electric wave to the management apparatus, and
the management apparatus comprises:
a status judgment unit configured to associate the acquired parts information with the received strength and to judge whether or not a difference between the acquired received strength and the received strength previously acquired for the target part indicated by the type information comprised in the parts information continuously exceeds a predetermined range for a predetermined period; and
a notification unit configured to output malfunction information when the status judgment unit judges that the difference continuously exceeds the predetermined range for the predetermined period.

5. The parts information management system according to any one of claims 1 to 4, further comprising:
a working vehicle comprising the identification device, the communication device and the transmitter;
a management center comprising the management apparatus: and
a communication network configured to wirelessly connect the working vehicle and the management center.

6. A parts information management system comprising:
a working vehicle;
a management center; and
a communication network configured to wirelessly connect the working vehicle and the management center, wherein
the working vehicle comprises:
an identification device attached to a filter provided at a predetermined installation position, the identification device being configured to store parts information for identifying the filter;
a communication device configured to wirelessly communicate with the identification device to acquire the parts information; and
a transmitter configured to transmit acquisition information comprising the parts information acquired by the communication device,
the management center comprises a management apparatus configured to manage the acquisition information received from the transmitter,
the parts information comprises: type information indicating a type of the filter; and unique information for distinguishing the filter from filters of the same type, and
the management apparatus comprises:
a storage unit configured to store the type information and a number of parts indicating a number of the filter provided at the installation position in association with each other;
an acquisition information judgment unit configured to acquire from the storage unit the number of parts corresponding to the type information comprised in pieces of parts information of the same type having the same type information and different unique information, and to judge whether or not more number of the pieces of parts information of the same type than the acquired number of parts is comprised in the acquisition information; and
a notification unit configured to output malfunction information when the acquisition information judgment unit judges that the acquisition information comprises more the parts information of the same type than the number of parts.

7. A parts information management method for acquiring and managing parts information, the parts information comprising type information indicating a type of a target part provided at a predetermined installation position, and unique information for distinguishing the target part from target parts of the same type, the method comprising:
judging whether or not more number of pieces of parts information of the same type having the same type information and different unique information than a number of parts defined by a number of the target part provided at the installation position is acquired; and
when it is judged that the more number of pieces of parts information of the same type than the number of parts is acquired, outputting malfunction information.
